# EUROPEAN PATENT APPLICATION

(11) **EP 4 135 179 A1**
(43) Date of publication of application: **15.02.2023**
(21) Application number: 21871058.0
(22) Date of filing: 03.08.2021
(51) Int. Cl.: H02M 1/44, H02M 3/335

(54) **MULTI-PATH SWITCH MODE POWER SUPPLY AND ELECTRONIC DEVICE**

(30) Priority: 28.09.2020 CN 202011043811
(71) Applicant: ZTE Corporation, Shenzhen, Guangdong 518057 (CN)
(72) Inventor: LIU, Bin, Shenzhen, Guangdong 518057 (CN); AN, Bin, Shenzhen, Guangdong 518057 (CN); HUANG, Zongwei, Shenzhen, Guangdong 518057 (CN)
(74) Representative: Nordmeyer, Philipp Werner
(86) International application number: PCT/CN2021/110353
(87) International publication number: WO 2022/062681

(57) **Abstract**

A multi-path switch mode power supply (20) and an electronic device. The multi-path switch mode power supply (20) comprises a controller (201) and a plurality of switch circuits (202), wherein the switch circuits (202) are respectively connected to the controller (201) and the switch circuits (202) are arranged adjacent to each other, and the controller (201) is configured to control respective current loops of the at least two switch circuits (202) such that same remain opposite.

## Description

### CROSS-REFERENCE TO RELATED APPLICATION

This application is filed on the basis of Chinese Patent Application No. 202011043811.1 filed on September 28, 2020, and claims priority to the Chinese patent application, the entire contents of which are incorporated herein by reference.

### TECHNICAL FIELD

The present application relates to the technical field of switch mode power supplies, and in particular to a multi-path switch mode power supply and an electronic device.

### BACKGROUND

The switch mode power supply (SMPS), as a type of power supply, is a high-frequency electrical energy converter with a function of converting a level of voltage into a voltage or current required by a user through different forms of architectures. At present, the SMPS has been widely applied in all walks of life, such as the computer industry, the mobile phone industry, etc.

However, during operation, the switch mode power supply may generate electromagnetic interference (EMI). If there are sensitive devices near the switch mode power supply, the generated electromagnetic interference will affect the sensitive devices, reduce the performance of the sensitive devices or even disable the sensitive devices from operating normally.

### SUMMARY

In view of the above, the present application provides a multi-path switch mode power supply and an electronic device.

In accordance with an aspect of the present application, a multi-path switch mode power supply is provided, which includes a controller and a plurality of switching circuits, the plurality of switching circuits are connected to the controller respectively and arranged adjacent to each other, and the controller is configured to control current loops of at least two switching circuits of the plurality of switching circuits to be opposite.

In accordance with another aspect of the present application, an electronic device is provided, which includes a power supply circuit, the multi-path switch mode power supply as described above, and a load device.

### BRIEF DESCRIPTION OF DRAWINGS

FIG. 1 is a schematic diagram of a circuit structure of an electronic device according to an embodiment of the present application;
FIG. 2 is a schematic diagram of a circuit structure of a multi-path switch mode power supply according to an embodiment of the present application;
FIG. 3 is a schematic diagram of a circuit structure of a multi-path switch mode power supply in an embodiment of the present application;
FIG. 4 is another schematic diagram of a circuit structure of a multi-path switch mode power supply in an embodiment of the present application;
FIG. 5 shows an arrangement and wiring layout of first elements in an embodiment of the present application;
FIG. 6 shows another arrangement and wiring layout of the first elements in an embodiment of the present application;
FIG. 7 is a schematic structural diagram of a switching circuit in an embodiment of the present application;
FIG. 8 is another schematic structural diagram of the switching circuit in an embodiment of the present application; and
FIG. 9 is a schematic diagram of an application scenario according to an embodiment of the present application.

### DETAILED DESCRIPTION

The technical schemes in the embodiments of the present application will be clearly and completely described below with reference to the accompanying drawings in the embodiments of the present application. Apparently, the described embodiments are only part, but not all the embodiments of the present application. All other embodiments obtained by those having ordinary skills in the art based on the embodiments in the present application without creative efforts shall fall within the protection scope of the present application.

Some embodiments of the present application will be described in detail below with reference to the accompanying drawings. The embodiments and the features in the embodiments described below can be combined with each other without conflicts.

During operation, a switch mode power supply may generate electromagnetic interference. In order to address this technical problem, one of the conventional techniques in the art is to adjust some elements, such as inductors, capacitors, resistors, and the like, in the switch mode power supply, e.g., replacing 10 mH inductors with 20 mH inductors. The second conventional technique in the art is to adjust operating parameters of a switching tube, e.g., adjusting an on-off frequency, etc., of the switching tube. It can be understood that both methods have changed the original operating mode of the switch mode power supply, which makes the switch mode power supply unable to operate in a better mode, resulting in the increase of power consumption.

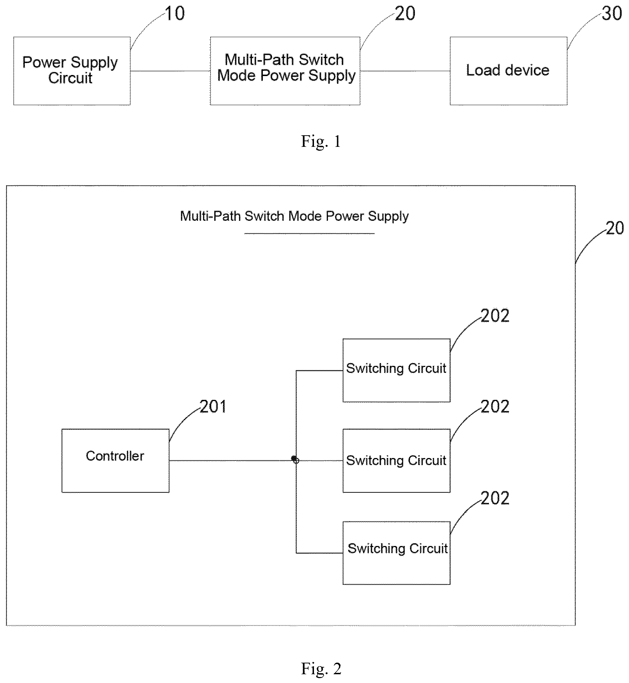

In view of the above, an embodiment of the present application provides an electronic device. As shown in FIG. 1, the electronic device includes a power supply circuit 10, a multi-path switch mode power supply 20, and a load device 30. The power supply circuit 10 is connected to the multi-path switch mode power supply 20, and the multi-path switch mode power supply 20 is connected to the load device 30.

In some embodiments, the multi-path switch mode power supply 20 may be connected to one or more power supply circuits 10, and the multi-path switch mode power supply 20 may also be connected to one or more load devices 30. The number of the power circuits 10 and the number of the load devices 30 may be reasonably set as required. In some embodiments, the power supply circuit 10 may include a direct-current power supply and/or an alternating-current power supply. In some examples, the power supply circuit 10 may include a lithium battery or the like, and the power supply circuit 10 may also include a mains supply or the like. In some embodiments, the multi-path switch mode power supply 20 is configured to process DC power and/or AC power output by the power supply circuit 10 into DC power and supply the DC power to the load device 30. The load device 30 may include an antenna or other sensitive devices.

As shown in FIG. 2, a multi-path switch mode power supply 20 provided by an embodiment of the present application includes a controller 201, and a plurality of switching circuits 202 which are connected to the controller 201 respectively and arranged adjacent to one another.

In some embodiments, the switching circuit 202 may include a DC conversion circuit or an AC conversion circuit. For example, the switching circuit 202 includes a buck circuit (buck chopper), a boost circuit (boost chopper), a buck-boost circuit (buck-boost chopper) or the like. It should be noted that although FIG. 2 only exemplarily shows three switching circuits 202 which are adjacently arranged on the same horizontal plane, the actual adjacent arrangement is not limited thereto.

The controller 201 is configured to control current loops of at least two switching circuits 202 to be opposite. In some embodiments, the controller 201 may control an operating mode of the switching circuits 202. For example, the controller 201 may control the operating mode of the switching circuits 202 by Pulse Width Modulation (PWM).

When operating, the switching circuit 202 may generate a magnetic field, which may interfere with the outside. In other words, the switching circuit 202 may generate external electromagnetic interference when operating. In addition, the intensity of the external interference is positively related to the intensity of the magnetic field. In the embodiments of the present application, when the multi-path switch mode power supply 20 operates, at least two switching circuits 202 operate simultaneously, and the current loops of the at least two switching circuits 202 are opposite. According to Ampere's law, if the current loops are opposite, magnetic fields generated are opposite in direction, that is, the magnetic fields generated respectively by the at least two switching circuits 202 are opposite in direction. In addition, since all the switching circuits 202 are arranged adjacent to each other, the magnetic fields generated respectively by the at least two switching circuits 202 can weaken or even cancel each other, that is, the magnetic fields generated by the multi-path switch mode power supply 20 are weakened, thus improving the electromagnetic interference generated by the multi-path switch mode power supply 20. Compared with the conventional technology in the art, the embodiments of the present application do not require adjustment of the elements in the switch mode power supply and the operating parameters of the switching tube, so that the switch mode power supply can operate in a better mode while alleviating the electromagnetic interference generated by the switch mode power supply.

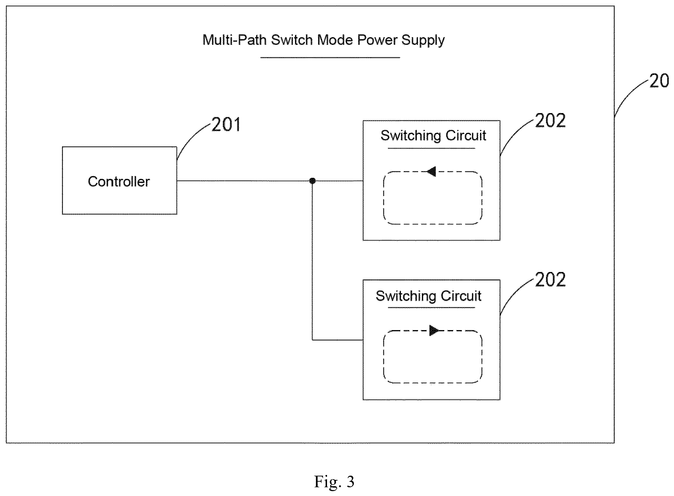

In some examples, as shown in FIG. 3, two switching circuits 202 are connected to the controller 201 respectively and arranged adjacent to each other. Based on this, when the multi-path switch mode power supply 20 operates, the controller 201 controls the current loops of the two switching circuits 202 to be opposite. For example, as shown in FIG. 3, the current loop of an upper switching circuit 202 is in a counterclockwise direction while the current loop of a lower switching circuit 202 is in a clockwise direction, such that the magnetic fields generated by the two current loops weaken or even cancel each other, thus alleviating the electromagnetic interference generated by the multi-path switch mode power supply 20 during operation.

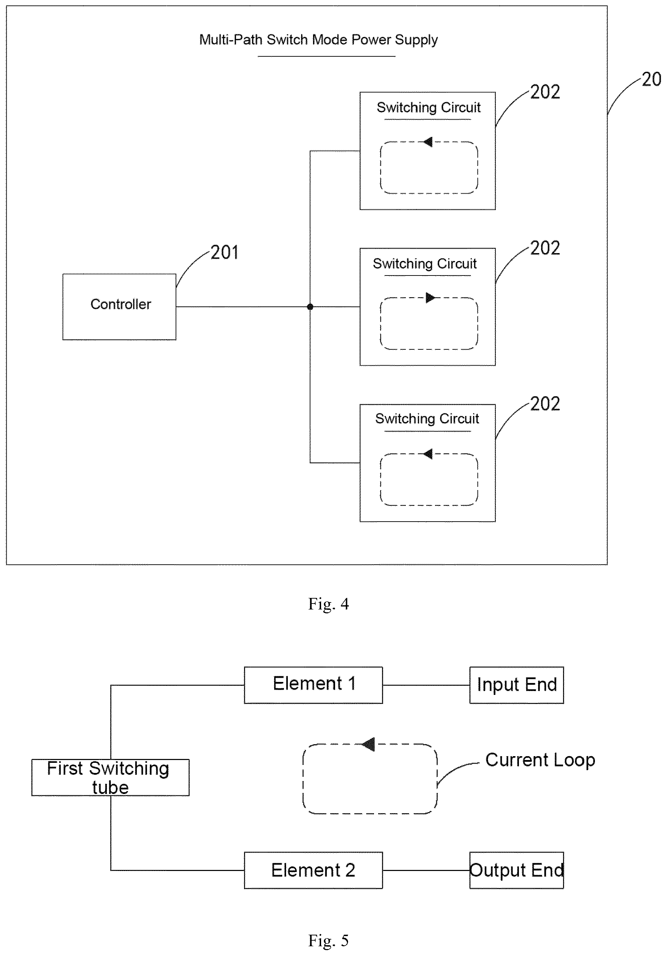

In some examples, as shown in FIG. 4, three switching circuits 202 are connected to the controller 201 respectively and arranged adjacent to one another. Based on this, when the multi-path switch mode power supply 20 operates, the controller 201 controls the current loops of the three switching circuits 202 to be opposite. For example, as shown in FIG. 4, the current loops of an upper switching circuit 202 and a lower switching circuit 202 are in the counterclockwise direction, while the current loop of a middle switching circuit 202 is in the clockwise direction, so that the magnetic fields generated by the three current loops weaken or even cancel each other, thus alleviating the electromagnetic interference generated by the multi-path switch mode power supply 20 during operation.

In some embodiments, the switching circuit 202 may include a first switching tube and a second switching tube, where at least one of the switching tubes in the switching circuit 202 is connected to the controller 201, i.e., the first switching tube and/or the second switching tube. For example, the first switching tube is connected to the controller 201 and the second switching tube is not connected to the controller 201, or both the first switching tube and the second switching tube are connected to the controller 201. In addition, because the switching circuit 202 has a voltage processing function, the controller 201 controls only one switching tube to be in an on-state at a time. That is, when the first switching tube is switched on, the second switching tube is switched off, and when the first switching tube is switched off, the second switching tube is switched on. For example, during operation of the switching circuit 202, when the first switching tube is switched on, the second switching tube is switched off, and after a certain period of time, the first switching tube is switched off and the second switching tube is switched on. The switching tube may include, but not limited to, a transistor, a diode, etc. In some embodiments, the first switching tube and the second switching tube may be integrally packaged in a switching chip. For example, the first switching tubes and the second switching tubes of all the switching circuits 202 may be integrally packaged in a switching chip.

In order to effectively alleviate the electromagnetic interference generated by the multi-path switch mode power supply 20, it is necessary to ensure that the current loop of the switching circuit 202 has a certain directivity. Therefore, on the one hand, a current loop formed between first elements of the switching circuit 202 in the operating state when the first switching tube is switched on is in a first direction, that is, the current loop of the switching circuit 202 is in the first direction when the first switching tube is switched on; on the other hand, a current loop formed between second elements of the switching circuit 202 in the operating state when the second switching tube is switched on is in a second direction, that is, the current loop of the switching circuit 202 is in the second direction when the second switching tube is switched on. The first direction and the second direction include a clockwise direction or a counterclockwise direction.

The switching circuit 202 may include other elements besides the first switching tube and the second switching tube, e.g., capacitors, inductors, etc. When the first switching tube is switched on, the first elements operate while the second elements do not operate. It can be known from the operating principle of the switching circuit 202 that the current flows in the switching circuit 202 in a fixed sequence, for example, the current flows through an element A and then an element B. Therefore, the first elements can be arranged and wired in a certain way, such that the current loop formed between the first elements is in the first direction, and whether the first direction is the clockwise direction or the counterclockwise direction depends on the arrangement and wiring layout between the first elements. Correspondingly, a similar holds true when the second switching tube is switched on, and will not be repeated herein.

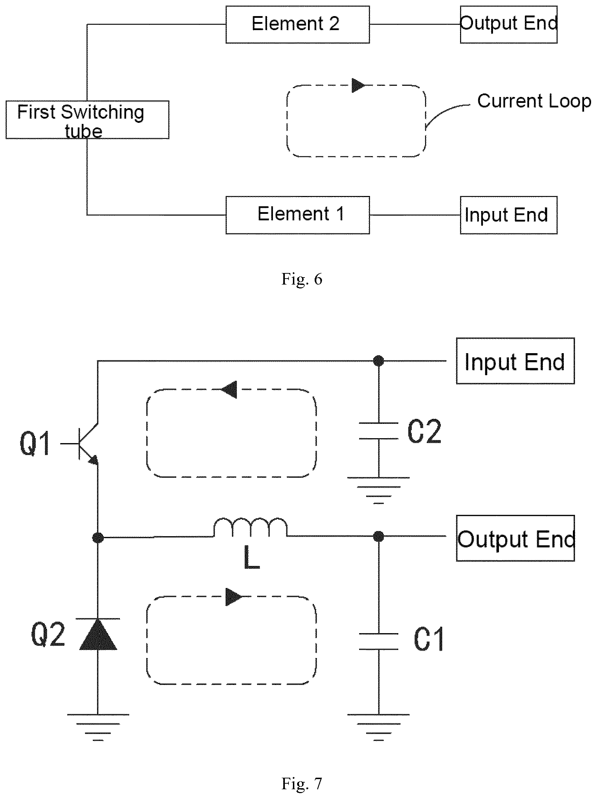

In some examples, as shown in FIG. 5, when the first switching tube is switched on, an element 1, an element 2 and the first switching tube operate, that is, the first elements include the element 1, the element 2 and the first switching tube, and a flowing sequence of the current is: input end -> element 1 -> first switching tube -> element 2 -> output end. In addition, the arrangement and wiring layout of the first elements is shown as FIG. 5, so it should be understood that the current loop of the switching circuit 202 is in the counterclockwise direction, that is, the first direction is the counterclockwise direction. For another example, as shown in FIG. 6, if the first elements and the flowing sequence of the current in FIG. 6 are the same as those in FIG. 5 and the arrangement and wiring layout of the first elements is shown as FIG. 6, the current loop of the switching circuit 202 is in the clockwise direction, that is, the first direction is the clockwise direction. It should be noted that, the arrangement and wiring layout of the first elements is not limited thereto.

In some embodiments, the switching circuit 202 further includes an input end, an output end, an inductor, a first capacitor, and a second capacitor. The inductor and the first switching tube are connected between the input end and the output end, the inductor is also connected between the second switching tube and the first capacitor, and the second capacitor is connected to the input end or the output end.

The input end may be configured to be connected to the power supply circuit 10, and the output end may be configured to be connected to the load device 30. It should be noted that the input ends of different switching circuits 202 may be connected to a same power supply circuit 10 or different power supply circuits 10, and likewise, the output ends of different switching circuits 202 may be connected to a same load device 30 or different load devices 30.

In some examples, as shown in FIG. 7, the switching circuit 202 may include a DC converter buck circuit in which an input end is configured to be connected to the power supply circuit 10, an output end is configured to be connected to the load device 30, an inductor L and a first switching tube Q1 are connected between the input end and the output end, the inductor L is also connected between a second switching tube Q2 and a first capacitor C1, and a second capacitor C2 is connected to the input end. The first switching tube Q1 includes a transistor, and the second switching tube Q2 includes a diode. In addition, the first switching tube Q1 may be connected to the controller 201 and switched on or off under the control of the controller 201. Certainly, the second switching tube Q2 may also include a transistor, and is connected to the controller 201 and switched on or off under the control of the controller 201. Based on this, it can be known from the operating principle of the buck circuit that when the first switching tube Q1 is switched on, the elements in the operating state at this time include the second capacitor C2, the first switching tube Q1 and the inductor L, and the flowing sequence of the current is: input end -> second capacitor C2 -> first switching tube Q1 -> inductor L -> output end. Therefore, it can be known from the arrangement and wiring layout of these elements in FIG. 7 that the current loop of the switching circuit 202 is in the counterclockwise direction at this time, that is, the first direction is the counterclockwise direction; when the second switching tube Q2 is switched on, the elements in the operating state at this time include the inductor L, the first capacitor C1 and the second switching tube Q2, and the flowing sequence of the current is: inductor L -> first capacitor C1 -> second switching tube Q2 -> inductor L. Therefore, it can be known from the arrangement and wiring layout of these three elements in FIG. 7 that the current loop of the switching circuit 202 is in the clockwise direction at this time, that is, the second direction is the clockwise direction.

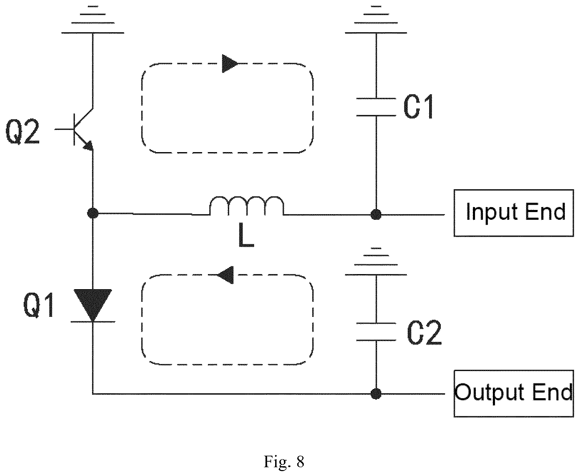

In some examples, as shown in FIG. 8, the switching circuit 202 may include a DC converter boost circuit in which an input end is configured to be connected to the power supply circuit 10, an output end is configured to be connected to the load device 30, an inductor L and a first switching tube Q1 are connected between the input end and the output end, the inductor L is also connected between a second switching tube Q2 and a first capacitor C1, and a second capacitor C2 is connected to the output end. The first switching tube Q1 includes a diode, and the second switching tube Q2 includes a transistor. In addition, the second switching tube Q2 may be connected to the controller 201 and switched on or off under the control of the controller 201. Certainly, the first switching tube Q1 may also include a transistor, and is connected to the controller 201 and switched on or off under the control of the controller 201. Based on this, it can be known from the operating principle of the boost circuit that when the first switching tube Q1 is switched on, it can be known from the arrangement and wiring layout of the inductor L, the first switching tube Q1 and the second capacitor C2 in FIG. 8 that the current loop of the switching circuit 202 is in the counterclockwise direction, that is, the first direction is the counterclockwise direction; when the second switching tube Q2 is switched on, it can be known from the arrangement and wiring layout of the inductor L, the second switching tube Q2 and the first capacitor C1 in FIG. 8 that the current loop of the switching circuit 202 is in the clockwise direction, that is, the second direction is the clockwise direction. It should be noted that since those having ordinary skills in the art are familiar with the operating principle of the boost circuit, no extensive inferential analysis will be made here.

In some embodiments, the aforementioned at least two switching circuits 202 include a first switching circuit and a second switching circuit. There may be one or more first switching circuits and one or more second switching circuits, which is not limited by the embodiments of the present application.

It can be known from the above that the current loop of the switching circuit 202 is in the first direction when the first switching tube is switched on, and is in the second direction when the second switching tube is switched on. Moreover, at least one of the switching tubes in the switching circuit 202 is connected to the controller 201 and switched on or off under the control of the controller 201, so the controller 201 can keep the current loops of the first switching circuit and the second switching circuit opposite from each other by controlling the on-off of the switching tubes. Based on this, if the first switching circuit and the second switching circuit are opposite in both the first direction and the second direction, the controller 201 can control the first switching tube of the first switching circuit and the first switching tube of the second switching circuit to be switched on or off synchronously, i.e. switched on or off together, and/or control the second switching tube of the first switching circuit and the second switching tube of the second switching circuit to be switched on or off synchronously, so as to ensure that the current loops of the first switching circuit and the second switching circuit can be opposite, thus alleviating the electromagnetic interference generated by the multi-path switch mode power supply 20. In addition, if the first switching circuit and the second switching circuit are the same in both the first direction and the second direction, that is, the first direction of the first switching circuit is opposite to the second direction of the second switching circuit and the second direction of the first switching circuit is opposite to the first direction of the second switching circuit, the controller 201 can control the first switching tube of the first switching circuit and the second switching tube of the second switching circuit to be switched on or off synchronously, and/or control the second switching tube of the first switching circuit and the first switching tube of the second switching circuit to be switched on or off synchronously, so as to ensure that the current loops of the first switching circuit and the second switching circuit can be opposite, thus alleviating the electromagnetic interference generated by the multi-path switch mode power supply 20.

In some embodiments, current values of the current loops of the at least two switching circuits has a difference less than a preset threshold. It can be known from the Ampere' law that the intensity of the magnetic field generated by the current loop is positively related to the current of the current loop. Therefore, when the difference between the current values of the current loops of the at least two switching circuits is smaller than the preset threshold, the electromagnetic interference generated by the multi-path switch mode power supply 20 can be more effectively alleviated. It should be noted that the preset threshold may be reasonably set according to an actual situation, and the method of obtaining the magnitude of the current of a current loop is not limited in the embodiments of the present application.

In some embodiments, the multi-path switch mode power supply 20 may further include a voltage dividing circuit which is connected to the switching circuits. There may be one or more voltage dividing circuits. For example, there may be one voltage dividing circuit, and each of the switching circuits is connected to the voltage dividing circuit. For another example, the number of the voltage dividing circuits may be the same as the number of the switching circuits, with one voltage dividing circuit connected to one switching circuit. In some embodiments, the voltage dividing circuit may include a voltage dividing resistor, and a specific resistance value of the voltage dividing resistor may be reasonably set according to an actual situation.

In some embodiments, the multi-path switch mode power supply 20 may further include a voltage regulator circuit which is connected to the switching circuits. There may be one or more voltage regulator circuits. For example, there may be one voltage regulator circuit, and each switching circuit is connected to the voltage regulator circuit. For another example, the number of the voltage regulator circuits may be the same as the number of the switching circuits, with one voltage regulator circuit connected to one switching circuit.

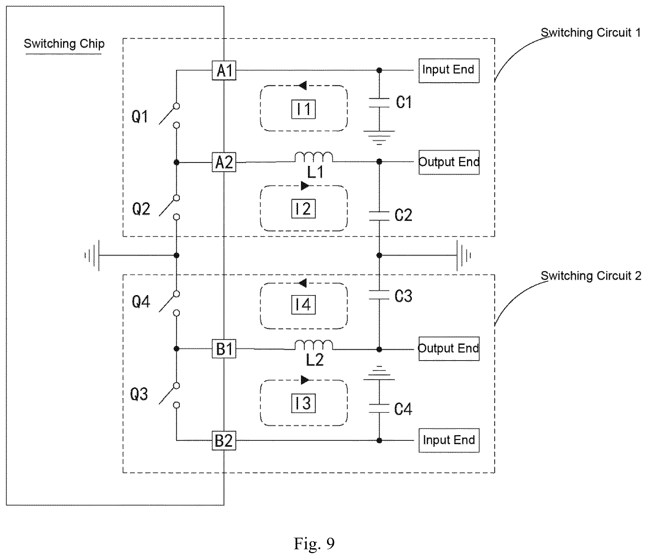

Based on the above, the embodiments of the present application may be applied to the multi-path switch mode power supply as shown in FIG. 9, which includes two switching circuits, i.e., a switching circuit 1 and a switching circuit 2. The switching circuit 1 includes a first switching tube Q1 and a second switching tube Q2, the switching circuit 2 includes a first switching tube Q3 and a second switching tube Q4, and these four switching tubes are integrally packaged in a switching chip. In addition, both the switching circuit 1 and the switching circuit 2 may include a buck circuit, and other elements and connection relationships included in the switching circuit 1 and the switching circuit 2 are shown in FIG. 9, and will not be repeated here. Based on this, it can be known from the operating principle of the buck circuit and the arrangement and wiring layout of the elements in FIG. 9 that, a current loop I1 of the switching circuit 1 is in a counterclockwise direction when the switching tube Q1 is switched on; a current loop I2 of the switching circuit 1 is in a clockwise direction when the switching tube Q2 is switched on; a current loop I3 of the switching circuit 2 is in the clockwise direction when the switching tube Q3 is switched on; and a current loop I4 of the switching circuit 2 is in the counterclockwise direction when the switching tube Q4 is switched on, so that the current loop I1 is opposite to the current loop I3 and the current loop I2 is opposite to the current loop 14. Based on this, the controller (not shown in FIG. 9) can control the switching tube Q1 and the switching tube Q3 to be switched on or off synchronously, and/or control the switching tube Q2 and the switching tube Q4 to be switched on or off synchronously, so as to ensure that the current loops of the switching circuit 1 and the switching circuit 2 can be opposite, thus alleviating the electromagnetic interference generated by the multi-path switch mode power supply.

According to the multi-path switch mode power supply and the electronic device provided by the embodiments of the present application, the multi-path switch mode power supply includes a controller and a plurality of switching circuits. The switching circuits are connected to the controller respectively and arranged adjacent to one another, and the controller is configured to control current loops of at least two switching circuits to be opposite. It can be understood that when the multi-path switch mode power supply operates, at least two switching circuits operate simultaneously, and the current loops of the at least two switching circuits are opposite. It can be known from the Ampere' law that if the current loops are opposite, the generated magnetic fields are opposite in direction, that is, the magnetic fields generated by the at least two switching circuits are opposite from each other in direction. In addition, since all the switching circuits are arranged adjacent to one another, the magnetic fields generated by the at least two switching circuits can weaken or even cancel each other, that is, the magnetic fields generated by the multi-path switch mode power supply are weakened, thus alleviating the electromagnetic interference generated by the multi-path switch mode power supply.

The above are merely embodiments of the present application, but the protection scope of the present application is not limited thereto. The having ordinary skills in the art can easily think of various equivalent modifications or substitutions within the technical scope disclosed by the present application, and these modifications or substitutions shall fall within the protection scope of the present application. Therefore, the protection scope of the present application shall be subject to the protection scope of the claims.

## Claims

1. A multi-path switch mode power supply, comprising a controller and a plurality of switching circuits, wherein the plurality of switching circuits are connected to the controller respectively and arranged adjacent to each other, and
the controller is configured to control current loops of at least two switching circuits of the plurality of switching circuits to be opposite.

2. The multi-path switch mode power supply of claim 1, wherein each of the plurality of switching circuits comprises a first switching tube and a second switching tube;
the first switching tube and/or the second switching tube are connected to the controller, and the controller is configured to only control one of the first switching tube or the second switching tube of the switching circuit to be switched on at a time;
in response to the first switching tube being switched on, a current loop formed between first elements of the switching circuit in an operating state is in a first direction;
in response to the second switching tube being switched on, a current loop formed between second elements of the switching circuit in the operating state is in a second direction; and
wherein the first direction and the second direction comprise a clockwise direction or a counterclockwise direction.

3. The multi-path switch mode power supply of claim 2, wherein the at least two switching circuits comprise a first switching circuit and a second switching circuit;
in response to the first direction of the first switching circuit and the first direction of the second switching circuit being opposite and the second direction of the first switching circuit and the second direction of the second switching circuit being opposite, the controller is configured to control the first switching tube of the first switching circuit and the first switching tube of the second switching circuit to be switched on or off synchronously, and/or control the second switching tube of the first switching circuit and the second switching tube of the second switching circuit to be switched on or off synchronously; or
in response to the first direction of the first switching circuit and the first direction of the second switching circuit being the same and the second direction of the first switching circuit and the second direction of the second switching circuit being the same, the controller is configured to control the first switching tube of the first switching circuit and the second switching tube of the second switching circuit to be switched on or off synchronously, and/or control the second switching tube of the first switching circuit and the first switching tube of the second switching circuit to be switched on or off synchronously.

4. The multi-path switch mode power supply of claim 2, wherein each of the plurality of switching circuits further comprises an input end, an output end, an inductor, a first capacitor, and a second capacitor;
the inductor and the first switching tube are connected between the input end and the output end, the inductor is also connected between the second switching tube and the first capacitor, and the second capacitor is connected to the input end or the output end.

5. The multi-path switch mode power supply of claim 4, wherein the first switching tube and the second switching tube are integrally packaged in a switching chip.

6. The multi-path switch mode power supply of any of claims 1 to 5, wherein current values of the current loops of the at least two switching circuits has a difference less than a preset threshold.

7. The multi-path switch mode power supply of any of claims 1 to 5, further comprises a voltage dividing circuit connected to each of the plurality of switching circuits.

8. The multi-path switch mode power supply of any of claims 1 to 5, further comprises a voltage regulator circuit connected to each of the plurality of switching circuits.

9. The multi-path switch mode power supply of claims 1 to 5, wherein the switching circuit comprises a DC conversion circuit or an AC conversion circuit.

10. An electronic device, comprising a power supply circuit, the multi-path switch mode power supply of any of claims 1 to 9, and a load device.
